# EUROPÄISCHE PATENTSCHRIFT

(11) **EP 2 974 904 B1**
(45) Veröffentlichungstag und Bekanntmachung des Hinweises auf die Patenterteilung: **25.08.2021**
(21) Anmeldenummer: 15175911.5
(22) Anmeldetag: 08.07.2015
(51) Int. Cl.: B60M 1/234

(54) **OBERLEITUNGSANLAGE MIT SCHWINGUNGSTILGER**
OVERHEAD LINE SYSTEM WITH VIBRATION DAMPENER
SYSTÈME DE CATÉNAIRE AVEC AMORTISSEUR DE VIBRATIONS

(30) Priorität: 15.07.2014 DE 102014213755
(43) Veröffentlichungstag der Anmeldung: 20.01.2016
(73) Patentinhaber: Siemens Mobility GmbH, 81739 München (DE)
(72) Erfinder: Brodkorb, Albrecht, 99820 Hörselberg-Hainich (DE); Schaefer-Enkeler, Andreas, 91341 Röttenbach (DE)

(56) Entgegenhaltungen:
- EP-A1- 0 345 567
- EP-A1- 0 581 987
- AT-B- 274 931
- DE-A1- 3 207 238
- DE-A1- 4 444 387
- GB-A- 918 317
- JP-A- H1 148 832
- JP-U- S5 786 838
- None

## Beschreibung

Die Erfindung betrifft Oberleitungsanlagen gemäß dem Oberbegriff des Anspruchs 1.

Aus der deutschen Gebrauchsmusterschrift DE 29808633 U1 ist eine Oberleitungsanlage für die Bahnstromversorgung mit einem Kettenwerk, welches einen Fahrdraht trägt und ein Tragseil und eine Vielzahl von Hängern zum Aufhängen des Fahrdrahtes aufweist, bekannt. Das Kettenwerk ist durch eine Tragkonstruktion an einem Mast befestigt. Dabei umfasst die Tragkonstruktion einen Rohrschwenkausleger mit Auslegerrohr, Spitzenrohr, Stützrohr und Seitenhalter.

Weitere Oberleitungsanlagen sind aus der JP S57 86838 U, JP H11 48832 A, DE 32 07 987 A1, EP 0 581 987 A1, DE 44 44 387 A1, GB 918 317 A, EO 0 345 567 A1 oder AT 274 931 B bekannt

Beim elektrischen Betrieb von Schienenfahrzeugen im Fernverkehr wird die elektrische Energie nahezu ausschließlich mittels einer Oberleitung über Stromabnehmer auf die Fahrzeuge übertragen. Hierbei existieren hohe Anforderungen an das System von Oberleitung und Stromabnehmer, um einerseits eine unterbrechungsarme Übertragung der elektrischen Energie zu ermöglichen und andererseits den Verschleiß von Kontaktelementen von Oberleitung und Stromabnehmer, d.h. zwischen dem Fahrdraht und den Schleifleisten des Stromabnehmers, gering zu halten.

Oberleitungen stellen schwingfähige Gebilde dar, welche bei Stromabnehmerbefahrung angeregt werden. Bei Zügen mit mehre ren gleichzeitig betriebenen Stromabnehmern interagieren die folgenden Stromabnehmer mit einer bereits schwingenden Oberleitung.

Der Betrieb von Schienenfahrzeugen in sogenannter Mehrfachtraktion ist dementsprechend schwieriger, weil der oder die Stromabnehmer des oder der geführten Fahrzeuge an einer bereits durch den Stromabnehmer des führenden Fahrzeugs zu Schwingungen angeregten Oberleitung betrieben werden müssen, was einerseits zu einer verschlechterten Energieübertragung und andererseits zu einem erhöhten Verschleiß von Fahrdraht und Schleifleisten führt. Bei Hochgeschwindigkeitszügen werden beispielsweise zwei Stromabnehmer gleichzeitig am Fahrdraht eingesetzt. Im Schienennahverkehr können sogar 4 bis 6 Stromabnehmer gleichzeitig in Mehrfachtraktion eingesetzt werden.

Bisher wurden für ein verbessertes Zusammenwirken von Stromabnehmer und Fahrdraht die Amplituden von ausgelösten Schwingungen begrenzt, um die Auswirkungen auf die Befahrungsqualität zu verringern. Dies erfolgt durch konstruktive Anpassungen, beispielsweise mit höheren Abspannkräften des Kettenwerks. Damit werden die Amplituden der Schwingungen verringert, gleichzeitig aber die Schwingungsfrequenzen erhöht. Dies hat eine Verschiebung der Anregungen in höherfrequente Bereiche zur Folge, bietet aber keine hinreichende Lösung bei vergleichbaren Bedingungen für mehrere Stromabnehmer.

Aus der DE 20 2006 020 448 U1 ist es bekannt, Schwingungstilger zur Verminderung von Schwingungen eines Fahrdrahtes einzusetzen. Dabei können die Schwingungstilger nur in nicht von einem Stromabnehmer befahrenen Bereichen des Fahrdrahtes eingesetzt werden, d.h. im Bereich von Abspannvorrichtungen für den Fahrdraht.

Der Erfindung liegt die Aufgabe zugrunde, ausgehend von der bekannten Oberleitungsanlage aus der DE 20 2006 020 448 U1 Schwingungstilger unabhängig von der jeweiligen konstruktiven Ausgestaltung der Oberleitungsanlage am Fahrdraht positionieren zu können.

Die Erfindung löst diese Aufgabe durch eine Oberleitungsanlage gemäß Anspruch 1.

Unter Schwingungstilgern im Sinne der Erfindung werden dabei bekannte Schwingungstilger (auch kurz Tilger oder Tilgerpendel genannt) als eine besondere Art von Schwingungsdämpfern verstanden. Die Eigenfrequenz des Schwingungstilgers wird auf die zu eliminierende Resonanzfrequenz des schwingenden Objekts abgestimmt. Bei dieser Frequenz führt das Objekt nur noch geringe Bewegungen aus. Unterhalb und oberhalb dieser Frequenz ist die Amplitude des Objekts dagegen größer als ohne Tilger.

Die Tilgermasse bildet zusammen mit einer eigenen Tilgerfeder ein Pendel, dessen Eigenfrequenz auf die zu eliminierende Schwingfrequenz (beispielsweise einer Freileitung oder einer Oberleitung) eingestellt wird. Bei dieser Frequenz kann der Tilger große Auslenkungen ausführen - die Kräfte am Federansatzpunkt (= Befestigungspunkt mit der zu beruhigenden Struktur) werden daher ebenfalls groß. Der Schwingungstilger entzieht bei dieser Frequenz der Struktur Schwingungsenergie für seine eigenen Schwingbewegungen. Für den Fall, dass Drehschwingungen gemindert werden müssen, werden Drehschwingungstilger / Torsionsschwingungstilger wie beispielsweise so genannte Zweimassenschwungräder eingesetzt.

Darüber hinaus sind 3D-Tilger für das vermindern von Schwingungen in allen Raumrichtungen bekannt und können mit Vorteil erfindungsgemäß eingesetzt werden.

Für den Einsatz an der Oberleitungsanlage müssen die Schwingungstilger in an sich bekannter Weise so dimensioniert werden, dass sie in Bezug auf Gewicht und zu tilgende Frequenzen auf die Gegebenheiten bei Oberleitungsanlagen angepasst sind.

Ein Vorteil gegenüber dem Stand der Technik ist es, dass die Schwingungstilger an beliebiger Stelle eines Fahrdrahtes angebracht werden können und so präzise an Fahrdrahtbereichen mit großem Dämpfungsbedarf eingesetzt werden können, beispielsweise im mittleren Bereich zwischen zwei Masten. Weil bei der erfindungsgemäßen Oberleitungsanlage der Schwingungstilger das Befahren des Fahrdrahts mit einem Stromabnehmer nicht behindert, kann der Schwingungstilger auch an Abschnitten des Fahrdrahtes angebracht werden, an denen an Stromabnehmer vorbeifahren können muss.

Durch den erfindungsgemäßen Einsatz von Schwingungstilgern in der Oberleitungsanlage können die Schwingungen in den relevanten Frequenzen getilgt werden, bevor diese Schwingungen Einfluss auf die Interaktion mit folgenden Stromabnehmern haben. Daraus ergeben sich in vorteilhafter Weise für alle Stromabnehmer eines Zuges nahezu einheitliche Bedingungen für das Zusammenwirken mit der Oberleitung. Auch beim elektrischen Betrieb von Schienenfahrzeugen in Mehrfachtraktion wird eine vergleichbare Qualität der Energieübertragung wie in Einzeltraktion sichergestellt, denn bei Mehrfachtraktion ergeben sich besondere Anforderungen an das Dämpfen von Schwingungen des Fahrdrahts.

Es ergibt sich außerdem der Vorteil gegenüber einer Dämpfung von Schwingungen des Fahrdrahtes, dass ein Schwingungstilger der Schwingung des Fahrdrahtes direkt entgegen wirken kann und daher seine schwingungsvermindernde Wirkung nahezu unabhängig vom Mastabstand ausüben kann.

In einer bevorzugten Ausführungsform der erfindungsgemäßen Oberleitungsanlage ist der mindestens eine Schwingungstilger als Stockbridge-Schwingungstilger ausgebildet. Dies ist ein Vorteil, weil Stockbridge-Schwingungstilger z.B. bei Freileitungen lange erprobt, kostengünstig und wartungsarm sind.

Entsprechend der erfindungsgemäßen Oberleitungsanlage weist der Fahrdraht Rillen auf und der mindestens eine Schwingungstilger ist in den Rillen gehalten. Ein solcher so genannter Rillenfahrdraht ist weit verbreitet, weil er sich gut an einem Kettenwerk oder einer Deckenstromschiene einspannen lässt.

Dies ist ein Vorteil, weil auf diese Weise der Schwingungstilger an beliebiger Stelle des Fahrdrahtes positioniert werden kann, um Schwingungen zu dämpfen. Fahrdrähte weisen i.d.R. Rillen auf, um am Kettenwerk oder an Deckenstromschienen befestigt zu werden. Durch die Befestigung des Schwingungstilgers an den Rillenbereichen des Fahrdrahtes muss der Schwingungstilger der Fahrdraht nicht vollständig umgreifen, um rutschfest angebracht zu sein. Hierdurch bleibt der Fahrdraht durchgehend auch in den Bereichen mit Schwingungstilger befahrbar.

In einer anderen bevorzugten Ausführungsform der erfindungsgemäßen Oberleitungsanlage umfasst eine Tragkonstruktion der Oberleitungsanlage einen Fahrdrahtseitenhalter, an dem ein weiterer Schwingungstilger angeordnet ist. Dies ist vorteilhaft, weil auf diese Weise auch Schwingungen direkt an der Tragkonstruktion gedämpft werden können.

In einer weiteren bevorzugten Ausführungsform der erfindungsgemäßen Oberleitungsanlage umfasst die Tragkonstruktion ein Stützrohr, an dem ein zusätzlicher Schwingungstilger angeordnet ist. Dies ist vorteilhaft, weil auf diese Weise auch Schwingungen direkt an der Tragkonstruktion gedämpft werden können.

In einer anderen bevorzugten Ausführungsform der erfindungsgemäßen Oberleitungsanlage ist der weitere und/oder zusätzliche Schwingungstilger als Drehschwingungstilger ausgebildet. Dies ist ein Vorteil, weil Drehschwingungstilger besonders geeignet sind, Schwingungen der Tragkonstruktion zu dämpfen, die rotatorische Bewegungen ausführen, was insbesondere bei den Seitenhaltern der Fall ist.

Entsprechend der erfindungsgemäßen Oberleitungsanlage weist die Oberleitungsanlage ein Kettenwerk mit einem Tragseil und Hängern auf. Dies ist ein Vorteil, weil diese Konstruktion weit verbreitet und lange erprobt ist.

In einer anderen bevorzugten Ausführungsform der erfindungsgemäßen Oberleitungsanlage weist die Tragkonstruktion einen Rohrschwenkausleger mit einem Auslegerrohr, einem Spitzenrohr sowie dem Stützrohr und dem Seitenhalter auf. Dies ist ein Vorteil, weil diese Konstruktion weit verbreitet und lang erprobt ist.

In einer anderen bevorzugten Ausführungsform der erfindungsgemäßen Oberleitungsanlage ist der mindestens eine Schwingungstilger ausgelegt, Schwingungen im Bereich der Grundfrequenz der schwingfähigen Komponenten der Oberleitungsanlage zu vermindern. Dies ist ein Vorteil, weil auf diese Weise Schwingungen des Fahrdrahtes besonders effektiv vermindert werden und insbesondere bei Mehrfachtraktion ein nachfolgender Stromabnehmer nicht durch Fahrdrahtschwingungen belastet wird.

In einer anderen bevorzugten Ausführungsform der erfindungsgemäßen Oberleitungsanlage umfassen die schwingfähigen Komponenten der Oberleitungsanlage den Fahrdraht.

In einer anderen bevorzugten Ausführungsform der erfindungsgemäßen Oberleitungsanlage umfassen die schwingfähigen Komponenten der Oberleitungsanlage zusätzlich ein Kettenwerk.

In einer anderen bevorzugten Ausführungsform der erfindungsgemäßen Oberleitungsanlage umfassen die schwingfähigen Komponenten der Oberleitungsanlage zusätzlich eine Tragkonstruktion.

In einer anderen bevorzugten Ausführungsform der erfindungsgemäßen Oberleitungsanlage ist
der mindestens eine Schwingungstilger zur Verminderung von Schwingungen oberhalb der Grundfrequenz ausgebildet.

Dies ist ein Vorteil, weil dieser Frequenzbereich besonders häufig bei Schwingungen von Oberleitungen auftritt.

Es zeigen in schematischer Darstellung die
- Figur 1: ein Ausführungsbeispiel einer erfindungsgemäßen Oberleitungsanlage und
- Figur 2: eine Seitenansicht eines Schwingungstilgers am Fahrdraht nach der Ausführungsform gemäß Figur 1 und
- Figur 3: einen Querschnitt durch einen Schwingungstilger am Fahrdraht nach der Ausführungsform gemäß Figur 1.

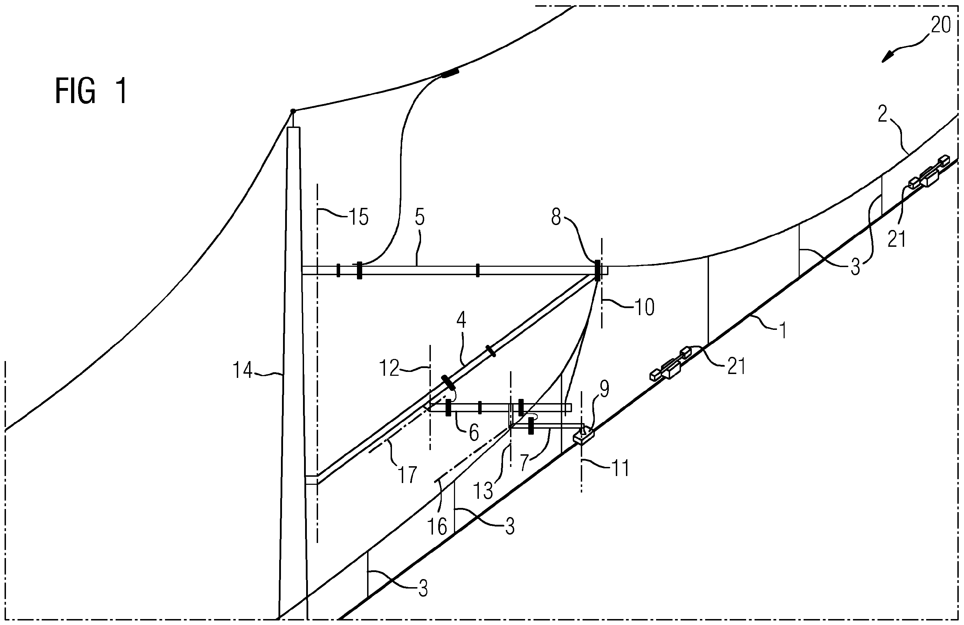

Die in Figur 1 dargestellte Oberleitungsanlage weist einen Fahrdraht 1, ein Tragseil 2 und eine Vielzahl von Hängern 3 für das Aufhängen des Fahrdrahtes auf. Dieses Kettenwerk ist durch eine Tragkonstruktion an einem Mast 14 befestigt. Die Tragkonstruktion, hier am Beispiel eines Rohrschwenkauslegers dargestellt, umfasst ein Auslegerrohr 4 mit einem Spitzenrohr 5 und einem Stützrohr 6 sowie einem Seitenhalter 7. Das Kettenwerk wird durch Aufhängung des Tragseils 2 am Auslegerrohr 4 in einem Tragseilaufhängerpunkt 8 getragen.

Der Fahrdraht selbst wird durch die Hänger 3 am Tragseil 2 gehalten und in seiner horizontalen Lage durch Aufhängung am Seitenhalter 7 mittels einer Fahrdrahtklemme geführt. Um die Funktion dieser Tragwerkkonstruktion für alle Betriebsfälle zu sichern, ist sie in verschiedenen Achsen gelenkig ausgeführt. Horizontale Bewegungen sind möglich um eine vertikale Achse 10 am Tragseilaufhängerpunkt 8, um eine vertikale Achse 11 an der Fahrdrahtklemme 9, um eine vertikale Achse 12 am Stützrohr 6 sowie um eine vertikale Achse 13 an der Aufhängung des Seitenhalters 7. Weiterhin ist 35 eine horizontale Bewegung der Tragkonstruktion an ihrer Befestigung am Mast 14 um eine vertikale Achse 15 möglich. Durch diese Konstruktion ist sichergestellt, dass Fahrdraht 1 und Tragseil 2, welche sich durch Umwelteinflüsse bzw. durch Stromfluss erwärmen und dadurch ausdehnen können, parallel zum Gleis wandern können, wobei diese Wanderbewegungen nicht in gleichem Maße verlaufen müssen. Nachdem bei Durchfahrt eines Stromabnehmers der Fahrdraht 1 auch in vertikaler Richtung an der Fahrdrahtklemme 9 angehoben wird, sind auch Rotationsbewegungen um horizontale Achsen 16 und 17 parallel zum Fahrdraht 1 möglich.

Zum Tilgen von Schwingungen, die durch Wind und/oder Befahrung durch einen Stromabnehmer entstehen können, weist der Fahrdraht 1 Schwingungstilger 21 auf, die in einem von einem Stromabnehmer befahrbaren Bereich des Fahrdrahtes angeordnet sind. Die Schwingungstilger 21 sind als Stockbridge-Schwingungstilger ausgebildet. Dabei sind die Schwingungstilger nach oben hin, also vom Gleisbett weg zeigend, angeordnet.

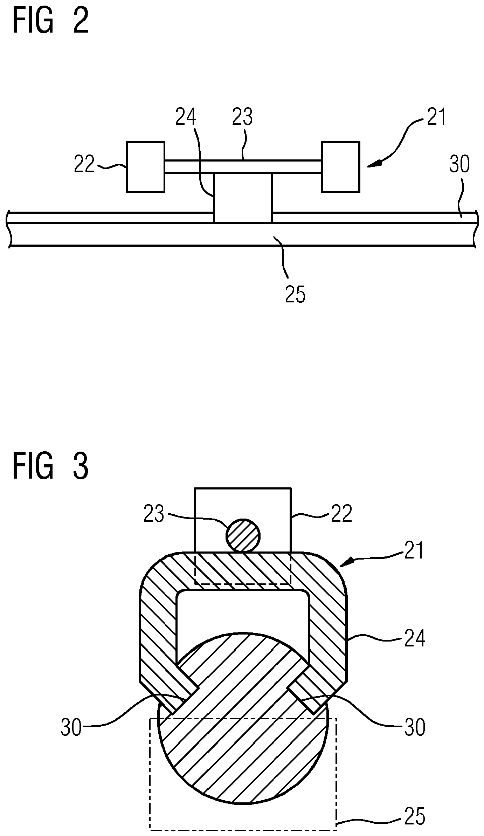

In der Figur 2 ist ein Stockbridge-Schwingungstilger 21 in einer Seitenansicht dargestellt. Der Stockbridge-Schwingungstilger 21 weist ein Seilstück 23 und zwei Endmassen 22 auf, die auf eine Haltevorrichtung 24 angebracht sind. Die Haltevorrichtung 24 greift in die Rillen 30 des Fahrdrahts ein und verankert den Stockbridge- Schwingungstilger 21 rutschfest. Insbesondere kann sich der Stockbridge-Schwingungstilger 21 nicht um den Fahrdraht herum nach unten drehen und bleibt in seiner Ausrichtung nach oben hin fixiert.

Die Figur 3 zeigt einen Querschnitt des Stockbridge-Schwingungstilgers 21 am Fahrdraht 1. Gleiche Bauteile sind mit den gleichen Bezugszeichen wie in Figur 2 bezeichnet. Die Haltevorrichtung 24 ist klammerartig ausgebildet und greift jeweils seitlich in die beiden Rillen 30 des Fahrdrahtes 1 ein. Dadurch umschließt die Haltevorrichtung 24 den Fahrdraht 1 nicht vollständig und lässt somit den dem Boden zugewandten Bereich des Fahrdrahtes 25 für ein Befahren des Fahrdrahtes 1 durch einen Stromabnehmer frei.

## Patentansprüche

1. Oberleitungsanlage (20) mit einem Fahrdraht (1), an dem mindestens ein Schwingungstilger (21) angebracht ist, mit einem Kettenwerk (2,3) mit einem Tragseil (2) und mit Hängern (3), mit denen der Fahrdraht (1) am Tragseil (2) aufgehängt ist, wobei der mindestens eine Schwingungstilger (21) derart an dem Fahrdraht (1) angebracht ist, dass der Schwingungstilger (21) den, dem Boden zugewandten Bereich des Fahrdrahtes (25) für ein Befahren des Fahrdrahtes durch einen Stromabnehmer freilässt, wobei der Fahrdraht (1) Rillen (30) aufweist und der mindestens eine Schwingungstilger (21) mit einer Haltevorrichtung (24) in den Rillen (30) gehalten ist, **dadurch gekennzeichnet, dass** der mindestens eine Schwingungstilger zwischen den Hängern (3) angebracht ist,
wobei der Schwingungstilger (21) mittels der Haltevorrichtung (24) ausschließlich mit dem Fahrdraht (1) verbunden ist.

2. Oberleitungsanlage (20) nach Anspruch 1,
**dadurch gekennzeichnet, dass** der mindestens eine Schwingungstilger (21) als Stockbridge-Schwingungstilger ausgebildet ist.

3. Oberleitungsanlage (20) nach einem der vorhergehenden Ansprüche,
**dadurch gekennzeichnet, dass** eine Tragkonstruktion (4,5,6,7,14) der Oberleitungsanlage (20) einen Fahrdrahtseitenhalter (7) umfasst, an dem ein weiterer Schwingungstilger angeordnet ist.

4. Oberleitungsanlage (20) nach einem der vorhergehenden Ansprüche,
**dadurch gekennzeichnet, dass** die Tragkonstruktion (4,5,6,7,14) ein Stützrohr (6) umfasst, an dem ein zusätzlicher Schwingungstilger angeordnet ist.

5. Oberleitungsanlage (20) nach Anspruch 3 oder 4,
**dadurch gekennzeichnet, dass** der mindestens eine weitere und/oder zusätzliche Schwingungstilger als Drehschwingungstilger ausgebildet ist.

6. Oberleitungsanlage (20) nach einem der vorhergehenden Ansprüche 3 bis 5,
**dadurch gekennzeichnet, dass** die Tragkonstruktion (4,5,6,7,14) einen Rohrschwenkausleger mit einem Auslegerrohr (4), einem Spitzenrohr (5) sowie dem Stützrohr (6) und dem Seitenhalter (7) aufweist.

7. Oberleitungsanlage (20) nach einem der vorhergehenden Ansprüche,
**dadurch gekennzeichnet, dass** der mindestens eine Schwingungstilger (21) ausgelegt ist, Schwingungen im Bereich der Grundfrequenz der schwingfähigen Komponenten der Oberleitungsanlage (20) zu vermindern.

8. Oberleitungsanlage (20) nach Anspruch 7,
**dadurch gekennzeichnet, dass** die schwingfähigen Komponenten der Oberleitungsanlage (20) den Fahrdraht (1) umfassen.

9. Oberleitungsanlage (20) nach Anspruch 8,
**dadurch gekennzeichnet, dass** die schwingfähigen Komponenten der Oberleitungsanlage (20) zusätzlich das Kettenwerk (2,3) umfassen.

10. Oberleitungsanlage (20) nach Anspruch 8 oder 9, **dadurch gekennzeichnet, dass** die schwingfähigen Komponenten der Oberleitungsanlage zusätzlich eine Tragkonstruktion (4,5,6,7,14) umfassen.

11. Oberleitungsanlage (20) nach einem der Ansprüche 7 bis 10,
**dadurch gekennzeichnet, dass** der mindestens eine Schwingungstilger (21) zur Verminderung von Schwingungen oberhalb der Grundfrequenz ausgebildet ist.

## Claims

1. Overhead line installation (20) with a contact wire (1), to which at least one vibration absorber (21) is attached, with a catenary system (2,3) with a catenary wire (2) and with droppers (3), which are used to suspend the contact wire (1) from the catenary wire (2),
wherein the at least one vibration absorber (21) is attached to the contact wire (1) in such a way that the vibration absorber (21) releases the region of the contact wire (25) facing the ground for travel by the contact wire by way of a current collector, wherein the contact wire (1) has grooves (30) and the at least one vibration absorber (21) is held in the grooves (30) by a holding apparatus (24), **characterised in that** the at least one vibration absorber is attached between the droppers (3), wherein the vibration absorber (21) is exclusively connected to the contact wire (1) by means of the holding apparatus (24).

2. Overhead line installation (20) according to claim 1, **characterised in that**
the at least one vibration absorber (21) is embodied as a Stockbridge vibration absorber.

3. Overhead line installation (20) according to one of the preceding claims,
**characterised in that**
a supporting structure (4,5,6,7,14) of the overhead line installation (20) comprises a contact wire side holder (7), on which a further vibration absorber is arranged.

4. Overhead line installation (20) according to one of the preceding claims,
**characterisedin that**
the supporting structure (4,5,6,7,14) comprises a support tube (6), on which an additional vibration absorber is arranged.

5. Overhead line installation (20) according to claim 3 or 4,
**characterised in that**
the at least one further and/or additional vibration absorber is embodied as a torsional vibration absorber.

6. Overhead line installation (20) according to one of the preceding claims 3 to 5,
**characterised in that**
the supporting structure (4,5,6,7,14) has a hinged tube cantilever with a cantilever tube (4), a top tube (5) as well as the support tube (6) and the side holder (7).

7. Overhead line installation (20) according to one of the preceding claims,
**characterised in that**
the at least one vibration absorber (21) is designed to reduce vibrations in the range of the basic frequency of the components of the overhead line installation (20) that are prone to vibration.

8. Overhead line installation (20) according to claim 7, **characterised in that**
the components of the overhead line installation (20) that are prone to vibration comprise the contact wire (1).

9. Overhead line installation (20) according to claim 8, **characterised in that**
the components of the overhead line installation (20) that are prone to vibration additionally comprise the catenary system (2,3) .

10. Overhead line installation (20) according to claim 8 or 9,
**characterisedin that**
the components of the overhead line installation that are prone to vibration additionally comprise a supporting structure (4,5,6,7,14).

11. Overhead line installation (20) according to one of claims 7 to 10,
**characterised in that**
the at least one vibration absorber (21) is embodied for reducing vibrations above the basic frequency.

## Revendications

1. Système (20) de caténaire comprenant un fil (1) de contact, sur lequel est monté au moins un amortisseur (21) de vibrations, comprenant un ouvrage (2, 3) de chaînes ayant un câble (2) porteur et des tronçons (3) de suspension, par lesquels le fil (1) de contact est suspendu au câble (2) porteur,
dans lequel le au moins un amortisseur (21) de vibrations est monté sur le fil (1) de contact de manière à ce que l'amortisseur (21) de vibrations laisse libre la partie, tournée vers le sol, du fil (25) de contact pour que le fil de contact soit parcouru par un appareil de prise de contact, dans lequel le fil (1) de contact a des rainures (30) et le au moins un amortisseur (21) de vibrations est retenu dans les rainures (30) par un système (24) de retenue, **caractérisé en ce que** le au moins un amortisseur de vibrations est monté entre les tronçons (3) de suspension,
dans lequel l'amortisseur (21) de vibrations est relié, au moyen du système (24) de retenue, au fil (1) de contact exclusivement.

2. Système (20) de caténaire suivant la revendication 1, **caractérisé en ce que**
le au moins un amortisseur (21) de vibrations est constitué sous la forme d'un amortisseur de vibrations Stockbridge.

3. Système (20) de caténaire suivant l'une des revendications précédentes,
**caractérisé en ce que**
une construction (4, 5, 6, 7, 14) de support du système (20) de caténaire comprend un support (7) latéral de fil de contact, sur lequel est monté un autre amortisseur de vibrations.

4. Système (20) de caténaire suivant l'une des revendications précédentes,
**caractérisé en ce que**
la construction (4, 5, 6, 7, 14) de support comprend un tube (6) d'appui, sur lequel est monté un amortisseur supplémentaire de vibrations.

5. Système (20) de caténaire suivant la revendication 3 ou 4, **caractérisé en ce que**
le au moins un autre amortisseur de vibrations et/ou l'amortisseur de vibrations supplémentaire est constitué sous la forme d'un amortisseur de vibrations à rotation.

6. Système (20) de caténaire suivant l'une des revendications 3 à 5 précédentes,
**caractérisé en ce que**
la construction (4, 5, 6, 7, 14) de support a un porte à faux tubulaire de pivotement ayant un tube (4) de porte à faux, un tube (5) d'embout, ainsi que le tube (6) d'appui et le support (7) latéral.

7. Système (20) de caténaire suivant l'une des revendications précédentes,
**caractérisé en ce que**
le au moins un amortisseur (21) de vibrations est conçu pour amoindrir des vibrations dans le domaine de la fréquence fondamentale des éléments aptes à vibrer du système (20) de caténaire.

8. Système (20) de caténaire suivant la revendication 7, **caractérisé en ce que**
les éléments aptes à vibrer du système (20) de caténaire comprennent le fil (1) de contact.

9. Système (20) de caténaire suivant la revendication 8, **caractérisé en ce que**
les éléments aptes à vibrer du système (20) de caténaire comprennent supplémentairement l'ouvrage (2, 3) de chaînes.

10. Système (20) de caténaire suivant la revendication 8 ou 9, **caractérisé en ce que**
les éléments aptes à vibrer du système de caténaire comprennent supplémentairement une construction (4, 5, 6, 7, 14) de support.

11. Système (20) de caténaire suivant l'une des revendications 7 à 10,
**caractérisé en ce que**
le au moins un amortisseur (21) de vibrations est constitué pour amoindrir des vibrations au-dessus de la fréquence fondamentale.
